Europäisches Patentamt

European Patent Office

Office européen des brevets

(11) Veröffentlichungsnummer: **0 408 846 A1**

# (12) EUROPÄISCHE PATENTANMELDUNG

(21) Anmeldenummer: **90108502.7**

(22) Anmeldetag: **07.05.90**

(51) Int. Cl.5: **F23D 14/60, F23N 5/08**

(30) Priorität: **10.05.89 DE 3915247**

(43) Veröffentlichungstag der Anmeldung:
**23.01.91 Patentblatt 91/04**

(84) Benannte Vertragsstaaten:
**BE DE FR GB IT SE**

(71) Anmelder: **MESSER GRIESHEIM GMBH**
**Hanauer Landstrasse 330**
**D-6000 Frankfurt/Main 1(DE)**

(72) Erfinder: **Albert, Hans Joachim**
**Talstrasse 50a**
**D-6238 Hofheim-Lorsbach(DE)**
Erfinder: **Henrici, Reinhard, Dr.**
**Haideweg 13**
**D-6251 Eschhofen(DE)**
Erfinder: **Klisch, Joachim**
**Am Hussberg 5**
**D-6487 Flörsbachtal 1(DE)**

(54) **Verfahren zum automatischen Einstellen von Brenngas/Sauerstoff- oder Luft-Gemischen von Wärm- oder Schneidbrennern.**

(57) Die Erfindung betrifft ein Verfahren zum automatischen Einstellen von Brenngas/Sauerstoff- oder Luft-Gemischen von Wärm- oder Schneidbrennern (10), deren Gaszusammensetzungen durch die Ansteuerung von Stellgliedern (18, 31, 32) mittels von einer Steuereinheit (12) ausgegebener Signale verändert werden können.

Es wird vorgeschlagen, daß über in der Steuereinheit (12) abgelegte Signale, die durch die Stellglieder (18, 31, 32) vorgegebenen Drücke bzw. Mengen für den Sauerstoff oder die Luft und das Brenngas auf eine zündfähiges Gemisch eingestellt und automatisch gezündet werden, daß nach dem Zünden die Stellglieder (32) für die Brenngase mittels von der Steuereinheit (12) ausgebener Signale auf eine reduzierte und/oder erhöhte Brenngasmenge bzw. ein reduzierter und/oder erhöhter Brenngasdruck eingestellt werden, daß ein lichtempfindlicher Sensor (19) die beim Reduzieren und/oder Erhöhen der Brenngasmenge sich ändernde Strahlung der Flamme erfaßt, und daß eine mit dem lichtempfindlichen Sensor (19) verbundene Auswerteeinrichtung (13) in Abhängigkeit von der Gasart und der erfaßten Strahlungsänderung ein Signal erzeugt, mittels dem die Stellglieder (32) auf eine Brenngasmenge bzw. einen Brenngasdruck eingestellt werden.

FIG. 1

EP 0 408 846 A1

# VERFAHREN ZUM AUTOMATISCHEN EINSTELLEN VON BRENNGAS/SAUERSTOFF- ODER LUFT-GEMISCHEN VON WÄRM- ODER SCHNEIDBRENNERN

Die Erfindung betrifft ein Verfahren zum automatischen Einstellen von Brenngas/Sauerstoff- oder Luft-Gemischen von Wärm- oder Schneidbrennern nach dem Oberbegriff des Anspruches 1.

Das autogene Brennschneiden ist ein thermisches Verfahren zum Trennen von Stählen. Es beruht auf der Eigenschaft des Stahls, nach Erreichung der Zündtemperatur in reinem Sauerstoff sehr rasch zu verbrennen. Mit der Vorwärmflamme des Schneidbrenners wird der Stahl auf seine Zündtemperatur, die unter dem Schmelzpunkt liegt, angewärmt. Durch Öffnen des Schneidsauerstoffventiles wird reiner Sauerstoff unter Druck zugeführt, worauf der Stahl verbrennt. Die einmalig am Bearbeitungsanfang eingestellte Gaszusammensetzung der Vorwärmflamme beeinflußt die Heizleistung der Flamme und somit das Arbeitsergebnis des Bearbeitungsvorganges.

Bei der normalen Einstellung der Vorwärmflamme werden Acetylen und Sauerstoff im Verhältnis 1:1 gemischt. Dabei wird der für die vollständige Verbrennung der Gase noch fehlende Sauerstoff vom Flammenmantel aus der umgebenden Luft entnommen. Diese Einstellung wird als normale (neutrale) Flamme bezeichnet.

Bei bekannten Einrichtungen wird die Vorwärmflamme entweder manuell an Ventilen am Schneidbrenner oder über eine Steuereinheit mittels elektrischer Signale an Proportional-Druckventilen eingestellt (EP 0188763A2).

Dabei ist es nötig, die elektrischen Signale in Abhängigkeit von dem Brenngas, der Düsengröße, der Arbeitsphase und dem Düsentyp zu erstellen und in der Steuerung abzulegen. Dabei soll eine Konstanz des aus der Brennerdüse ausströmenden Brenngas/Sauerstoff-oder Luft-Gemisches durch aufwendige Maßnahmen zum Toleranzausgleich bei den einzelnen Brennern, den Armaturen und allen Gaszuführungen gewährleistet werden. Hierzu wird vorgeschlagen, in den Brenneranschlüssen eine Blende anzuordnen und die Druckdüsenbohrungen der Brenner zu kalibrieren oder brenngasseitig ein Einstellventil zum Abgleich von Differenzwerten vorzusehen. Weiterhin sind aus der DE 35 24 877 A1 und der US 2 416 161 Regeleinrichtungen bekannt, mittels denen das Brenngas/Sauerstoff- und/oder Luft-Gemisch während der Bearbeitung konstant gehalten werden kann. Während bei der DE 35 24 877 A1 über den Austausch von Tellerfederpaketen eine Anpassung der Regeleinrichtung an die Düsengröße erfolgen muß, wird bei der US-A 2,416,161 über eine manuell oder mittels Solenoid verstellbare Einstellschraube eines Druckreglers das Mischungsverhältnis eines Heizsauerstoff/Luftgemisch eingestellt. In Abhängigkeit von dieser Einstellung wird die Brenngasmenge verändert. Die Regelsignale für das Solenoid werden während des Bearbeitungsvorganges über eine unterhalb des Werkstückes angeordnete Fotozelle, die die Wärmestrahlung erfaßt, gebildet. Bei Abweichungen der Wärmestrahlung von einer von der Federkennlinie des Druckreglers abhängigen Einstellung wird die Gaszusammensetzung und damit die Heizleistung verändert.

In der DE 2 203 194 C1 ist ein Verfahren zum Steuern eines Gasschneidvorganges beschrieben, bei dem über eine sich kontinuierlich ändernde Ausgangsspannung im Ansprechen auf eine Änderung der Beleuchtung durch eine Schneidflamme die Versorgung mit Schneid-Sauerstoff, Vorwärmsauerstoff und Brenngas automatisch angehalten wird, wenn durch eine Ausgangsspannung 0 ein Fehlzünden erfaßt wird.

Darüber hinaus kann man der Broschüre "Trennen und Fügen" Nr.12, Messer Griesheim GmbH, Druckschrift 001.1212,5/1984, entnehmen, daß sich optische Sensoren zum Beurteilen der Mischungsverhältnisse von Flammen eignen.

Ausgehend von dem eingangs genannten Stand der Technik liegt der Erfindung die Aufgabe zugrunde, ein Verfahren zu schaffen, mit dem in Abhängigkeit von der zu erreichenden Schnittqualität eine neutrale Flamme oder eine Flamme mit Sauerstoff- oder Brenngasüberschuß automatisch bei Brennern ohne Toleranzausgleich, unabhängig von der Düsengröße und dem Düsentyp, eingestellt werden kann.

Diese Aufgabe wird erfindungsgemäß durch die kennzeichnenden Merkmale des Anspruches 1 gelöst.

Vorteilhafte Weiterbildungen der Erfindungen sind in den Unteransprüchen angegeben.

Durch die Erfindung kann die Schneid- oder Wärmflamme bei mehreren Brennern ohne Toleranzausgleich, unabhängig von der Düsengröße, dem Verschleißzustand der Düse und dem Düsentyp, auf ein gleiches Mischungsverhältnis eingestellt werden. Dabei entfällt der Nachteil des jeweils neuen Austauschens beziehungsweise Einstellens von Federpaketen. Gleichzeitig wird die Heizleistung der Vorwärmflamme durch eine konstante Einstellung der Sauerstoff- oder Luftmenge, zu der eine Brenngasmenge unabhängig davon eingestellt wird, konstant gehalten. Ein kostenintensiver Toleranzausgleich der Brenner kann bei dieser Einstellung ebenso entfallen, wie die manuelle Einstellung von separaten Ventilen zum Abgleich von Differenzwerten.

Durch die Erfindung müssen für die Einstellung der

Brenngasmenge bzw. des Brenngasdrucks nicht mehr alle Daten in Abhängigkeit von der Düsengröße und dem Düsentyp empirisch ermittelt und in der Steuereinheit der Brennschneidmaschine abgelegt werden. Es genügt, ledigich ein elektrisches Signal abzuspeichern, bei welchem unabhängig von der Düsengröße und dem Düsentyp eine Flamme gezündet werden kann.

Vorteilhaft werden über die Strahlungen an den Flammen die aktuellen Betriebszustände an der Maschine erfaßt, so daß auch Änderungen des Mischungsverhältnisses aufgrund der unterschiedlichen Wärmeausdehnungen der Brenner oder einzelner Komponenten des Brenners nach dem Zünden ausgeglichen werden.

Ein Ausführungsbeispiel der Erfindung ist in der Zeichnung dargestellt und wird im folgenden näher beschrieben.

Es zeigen

Figur 1 das Blockschaltbild einer Einrichtung zum Einstellen von Brenngas/Sauerstoff- oder Luft-Gemischen,

Figur 2 ein Diagramm über die Abhängigkeit des ermittelten Einstellwertes von dem Brenngas.

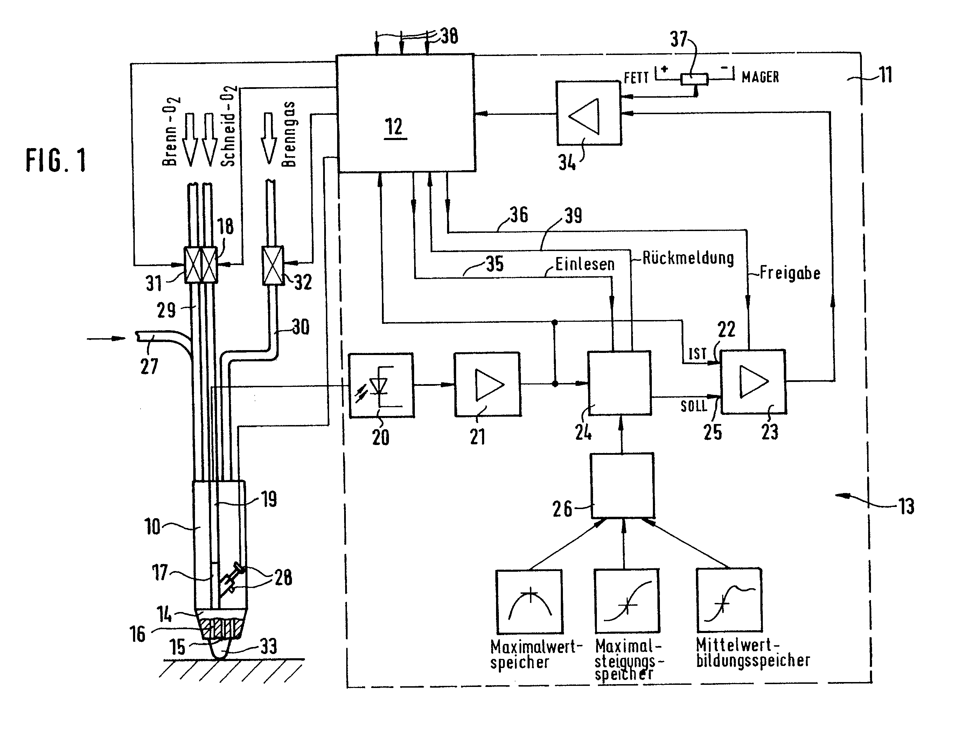

In der Figur 1 ist eine Einrichtung 11 zum Einstellen von Brenngas/Sauerstoff- oder Luft-Gemischen dargestellt, die im wesentlichen aus einem Gasschneidbrenner 10, einer Steuereinheit 12 und einer Auswerteeinrichtung 13 besteht. An dem Gasschneidbrenner ist eine Schneiddüse 14 befestigt. Die Schneiddüse 14 weist einen zentralen Schneidsauerstoffkanal 15 auf, der von ringförmigen Heizgaskanälen 16 umgeben ist. Der zentrale Schneidsauerstoffkanal 15 steht über eine Sauerstoffzuführung mit einer nicht näher dargestellten Sauerstoffversorgung in Verbindung. In der Sauerstoffzuführung ist ein von der Steuereinheit 12 ansteuerbares Stellglied 18 angeordnet. Innerhalb des Gasschneidbrenners 10 befindet sich koaxial zu der Sauerstoffzuführung 17 ein Lichtwellenleiter 19, der mit einem außerhalb des Brenners angeordneten lichtelektrischen Wandler verbunden ist. Über einen Verstärker 21 ist der lichtelektrische Wandler 20 mit einem Speicher 24, mit dem ersten Eingang 22 eines Reglers 23 und mit einer Steuereinheit 12 verbunden. Der zweite Eingang 25 des Reglers 23 ist mit dem Speicher 24 verbunden, an den ein Vorwahlspeicher 26 angeschlossen ist. Der Ausgang des Reglers 23 ist über einen weiteren Regler 34 mit der Steuereinheit 12 verbunden, die Eingänge 38 für die Eingabe von Daten aufweist. Von der Steuereinheit 12 kann der Speicher 24 und der Regler 23 über die Leitungen 35 und 36 gesteuert werden. Über Leitung 39 können der Steuereinheit 12 von dem Speicher 24 Daten übermittelt werden.

In die Sauerstoffzuführung 17 mündet eine nicht näher dargestellte Zündgasgemischzuführung 27. Das aus der Zündgasgemischzuführung 27 in die Sauerstoffzuführung 17 strömende Zündgasgemisch kann über eine Zündelektrode 28 gezündet werden und tritt bei geschlossenem Stellglied 18 als Zündflamme aus dem Schneidsauerstoffkanal 15 aus. Das Zündsignal wird von der Steuereinheit 12 ausgegeben.

Die Heizgaskanäle sind mit Heizsauerstoff- und Brenngaszuführungen 29 bzw. 30 verbunden. Das Brenngas und der Heizsauerstoff werden vorzugsweise vor dem Austritt aus den Heizgaskanälen 16 gemischt. In den Brenngas-und Heizsauerstoffzuführungen 29,30 ist jeweils ein Stellglied 31 bzw. 32 angeordnet, welches von der Steuereinheit 12 ansteuerbar ist.

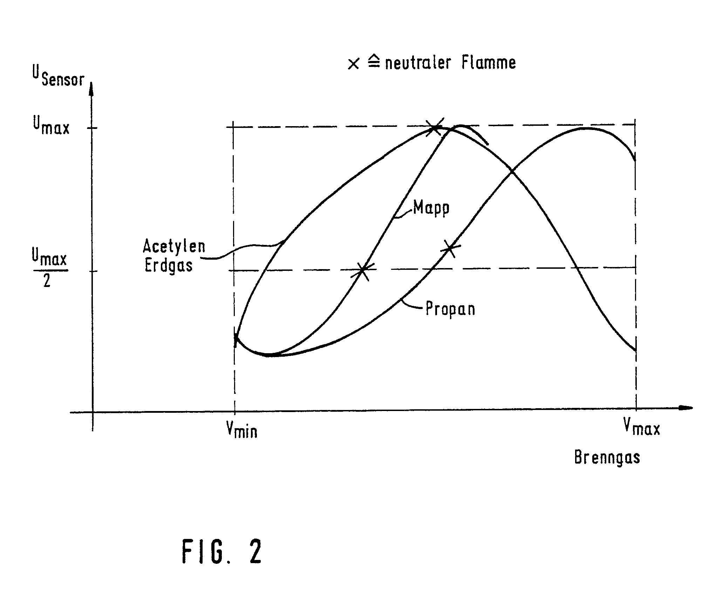

Zum automatischen Einstellen von Brenngas/Sauerstoff-oder Luft-Gemischen des Gasschneidbrenners 10 werden in der Steuereinheit 12 elektrische Signale (Daten) abgelegt, mittels denen die Stellglieder 18, 31, 32 angesteuert werden. Hierdurch werden die Stellglieder 18, 31, 32 auf vorgegebene Drücke bzw. Mengen für den Sauerstoff oder die Luft und das (die) Brenngas(e) eingestellt. Die Einstellung erfolgt hierbei so, daß aus den Heizgaskanälen 16 ein zündfähiges Brenngas/Sauerstoff- oder Brenngas/Luft-Gemisch ausströmt, welches aufgrund der Toleranzen in dem Gaszuführungen, Armaturen und Brennern differiert. Damit ist die Heizleistung der einzelnen Brenner und somit die Schnittqualität verschieden. Anschließend wird von der Steuereinheit 12 das nicht näher dargestellte Stellglied der Zündgasmischzuführung 27 geöffnet. Es strömt Zündgasgemisch in die Sauerstoffzuführung 17, welches mittels der Zündelektrode 28 gezündet und als Zündflamme aus dem Schneidsauerstoffkanal 15 austritt. Mit der Zündflamme wird das aus den Heizgaskanälen 16 strömende zündbare Brenngas/Sauerstoff- oder Brenngas/Luft-Gemisch gezündet. Der Lichtwellenleiter 19 erfaßt die Strahlung der Vorwärmflamme 33 und leitet diese zu dem lichtelektrischen Wandler 20, der das Strahlungssignal in ein elektrisches Signal umwandelt. Über das von dem Verstärker 21 verstärkte Spannungssignal wird der Steuereinheit 12 gemeldet, daß die Vorwärmflamme 33 brennt. Von der Steuereinheit 12 wird daraufhin über Leitung 35 das Signal "Einlesen" am dem Speicher 24 gemeldet. Der Speicher 24 liest aus dem Vorwahlspeicher 26 das jedem Brenngas zugeordnete und in Verbindung mit Fig. 2 näher dargestellte und beschriebene "Template" (Soll-Spannungs-Charakteristik) ein. Der Speicher ist danach für die Brenngase Acetylen oder Erdgas als Maximalwertspeicher, für das Brenngas Mapp als Mittelwertbildungsspeicher und für das Brenngas Propan als Maximalsteigungsspeicher ausgebildet. Währenddessen steht an dem Speicher 24 und dem Eingang 22 des gesperrten Reglers 23 das aus der Strahlung der Vorwärmflamme 33 gebildete und von dem lichtelektrischen Wandler 20 bewertete elektrische Ist-Signal an. Die Steuereinheit 12 reduziert oder erhöht dann das für die Einstellung der Vorwärmflamme 33 maßgebende Signal, so daß das Stellglied 32 verstellt wird und die Vorwärmflamme 33 mit mehr oder weniger Brenngas brennt.

Wie die folgenden Ausführungen zu dem in Figur 2 näher dargestellten Diagramm, für beispielsweise das Brenngas Acetylen zeigen, hat die von der Flamme 33 emittierte und von dem lichtelektrischen Wandler 20 bewertete Strahlung einen Spannungsverlauf, der ein Maximum aufweist, bei dem die Flamme normal, d. h. neutral, eingestellt ist. Links (Brenngasmangel) und rechts (Brenngasüberschuß) des Maximums fällt der Spannungsverlauf ab.

Wird nun, wie vorstehend beschrieben, die Durchflußmenge bzw. der Druck des Brenngases reduziert, dann entsteht bei voreingestellter magerer Vorwärmflamme, d. h. einer Vorwärmflamme mit Brenngasmangel, ein Spannungsabfall, während bei voreingestellter fetter Vorwärmflamme, d. h. einer Vorwärmflamme mit Brenngasüberschuß, ein Spannungsanstieg erfolgt. Diese Spannungsänderung gegenüber dem elektrischen Ist-Signal der ersteingestellten Vorwärmflamme 33 wird von dem Speicher 24 erfaßt, der daraufhin "weiß", ob die Vorwärmflamme 33 mit Brenngasüberschuß oder Brenngasmangel eingestellt ist. Über Leitung 39 wird der Steuereinheit 12 die Stellrichtung für das Stellglied 32 gemeldet, d. h., ob das Stellglied 32 für das Brenngas geöffnet oder reduziert werden muß. Danach gibt die Steuereinrichtung 12 über Leitung 36 den Regler 23 frei, der die Soll-Ist-Differenz in richtiger Stellrichtung abarbeitet, bis das Maximum des "Template" erreicht bzw. der lichtempfindliche Sensor 19, 20, 21 die von der Vorwärmflamme 13 emittierte und von dem lichtelektrischen Wandler 20 bewertete höchste Spannung erfaßt.

Wie die Figur 2 zeigt, verläuft die Spannungskurve für das Brenngas Mapp (Brenngasgemisch) S-förmig mit unsymmetrischer Anordnung bezogen auf den Spannungsmittelwert. Die Ermittlung des Brenngasanteiles der voreingestellten Vorwärmflamme erfogt daher bei diesem Brenngas so, daß die Steuereinheit 12 Steuersignale erzeugt, mittels denen das Stellglied 32 so lange geöffnet bzw. geschlossen wird, bis die von der Flamme emittierte und von dem lichtelektrischen Wandler bewertete Strahlung ihr Maximum und ihr Minimum erreicht hat. Diese Spannungssignale werden im Speicher 24 abgelegt. Der Regler 23 erzeugt dann ein Schaltsignal, mittels dem die Steuereinheit 12 das Stellglied 32 so lange öffnet oder schließt, bis der Lichtwellenleiter 19 die von der Flamme emittierte und von dem lichtelektrischen Wandler 20 bewertete mittlere Spannung erreicht ist. Diese mittlere Spannung entspricht einer neutralen Flammeneinstellung.

In der Figur 2 ist weiterhin die Spannungskurve für das Brenngas Propan gezeigt, die ebenfalls einen S-förmigen Verlauf mit nahezu symmetrischen Spannungshälften aufweist. Zur neutralen Flammeneinstellung erzeugt der Regler 23 ein Signal, mittels dem die Steuereinheit 12 das Stellglied 32 so lange öffnet oder schließt, bis die von der Flamme 33 emittierte und von dem lichtelektrischen Wandler 20 bewertete Strahlung die größte Steigung des in Figur 2 dargestellten Spannungsverlaufes erreicht hat.

Zwischen dem Regler 23 und der Steuereinheit 12 ist ein weiterer Regler 34 zwischengeschaltet, dessen einer Eingang mit dem Regler 23 und dessen anderer Eingang mit einem Einstellglied 37 verbunden ist. An dem Einstellglied 37 kann die von dem Regler 23 bewirkte neutrale Flammeneinstellung verändert werden.

Vorteilhaft kann durch die Erfindung die Flamme am Anfang eines oder nach einem Brennschnitt mittels automatischer Verstellung des Einstellgliedes 37, beim Lochstechen eine Flamme mit Brenngasüberschuß eingestellt werden, und nach Beendigung des Lochstechvor ganges automatisch auf eine neutrale Flammeneinstellung eingeregelt werden.

## Ansprüche

1. Verfahren zum automatischen Einstellen von Brenngas/Sauerstoff- oder Luftgemischen von Wärm- oder Schneidbrennern, deren Gaszusammensetzungen durch die Ansteuerung von Stellgliedern, mittels von einer Steuereinheit ausgegebener Signale verändert werden können,
dadurch gekennzeichnet,
daß über in der Steuereinheit (12) abgelegte Signale, die durch die Stellglieder (18, 31, 32) vorgegebenen Drücke bzw. Mengen für den Sauerstoff oder die Luft und das (die) Brenngas(e) auf ein zündfähiges Gemisch eingestellt und automatisch gezündet werden,
daß nach dem Zünden das (die) Stellglied(er) (32), für das (die) Brenngas(e) mittels von der Steuereinheit (12) ausgegebener Signale auf eine reduzierte und/oder erhöhte Brenngasmenge bzw. ein reduzierter und/oder erhöhter Brenngasdruck eingestellt wird (werden),
daß ein lichtempfindlicher Sensor (19) die beim Reduzieren und/oder Erhöhen der Brenngasmenge sich ändernde Strahlung der Flamme (33) erfaßt und daß eine mit dem lichtempfindlichen Sensor (19) verbundene Auswerteeinrichtung (13) in Abhängigkeit von der Gasart und der erfaßten Strahlungsänderung ein Signal erzeugt, mittels dem das (die) Stellglied(er) (32) auf eine Brenngasmenge bzw. einen Brenngasdruck eingestellt werden.

2. Verfahren nach Anspruch 1
dadurch gekennzeichnet,
daß beim Brenngas Acetylen oder Erdgas der Druck bzw. die Durchflußmenge durch das Stellglied (32), mittels dem von der Auswerteeinrichtung (13) erzeugten Signal so lange reduziert oder erhöht wird, bis der Sensor (19) die von der Flamme emittierte und von einem fotoelektrischen Wandler (20) bewertete maximale Strahlung erfaßt.

3. Verfahren nach Anspruch 1
dadurch gekennzeichnet,
daß beim Brenngas Mapp der Druck bzw. die Durchflußmenge durch das Stellglied (32), mittels den von der Steuereinheit (12) ausgegebenen Signalen so lange reduziert und erhöht wird, bis das Maximum und das Minimum der von der Flamme (33) emittierten und von dem lichtelektrischen Wandler (20) bewerteten Strahlung erfaßt ist und daß der Druck bzw. die Durchflußmenge durch das Stellglied (32), mittels dem von der Auswerteeinrichtung (13) erzeugten Signal so lange reduziert oder erhöht wird, bis der Sensor (19) eine von der Flamme (33) emittierte und von dem lichtelektrischen Wandler (20) als mittlere (zwischen dem Maximum und dem Minimum liegende) Spannung bewertete Spannung erfaßt.

4. Verfahren nach Anspruch 1
dadurch gekennzeichnet,
daß beim Brenngas Propan der Druck bzw. die Durchflußmenge durch das Stellglied (32), mittels den von der Auswerteeinrichtung (13) erzeugten Signalen so lange reduziert oder erhöht wird, bis der Sensor (19) die von der Flamme (33) emittierte Strahlung und von dem lichtelektrischen Wandler (20) als die größte Steigung der Spannungskurve bewertete Spannung erfaßt.

5. Verfahren nach einem der Ansprüche 1 bis 4,
dadurch gekennzeichnet,
daß beim Reduzieren oder Erhöhen des Druckes bzw. der Durchflußmenge des Brenngases von der Auswerteeinrichtung (13) die relative Brenngasmenge bezogen auf eine neutrale Flammeneinstellung ermittelt wird.

6. Verfahren nach einem der Ansprüche 1 bis 5,
dadurch gekennzeichnet,
daß durch die manuelle oder die automatische Verstellung eines Einstellgliedes (37) die über die Sensoren (19) ermittelte und von dem fotoelektrischen Wandler (20) bewerteten Durchflußmengen bzw. die Drücke des Brenngases verändert werden.

7. Einrichtung zum Einstellen von Brenngas/Sauerstoff-oder Luftgemischen mit Wärm- oder Schneidbrennern für die thermische Bearbeitung von Werkstücken, die über Leitungen an Gasversorgungsquellen angeschlossen sind und mit Stellgliedern, die in den Leitungen angeordnet und mittels Signalen von einer Steuereinheit einstellbar sind und mit einem lichtempfindlichen Sensor, der mit einer Auswerteeinrichtung verbunden ist,
dadurch gekennzeichnet,
daß der lichtempfindliche Sensor aus einem Lichtwellenleiter (19) und einem mit diesem verbundenen lichtelektrischen Wandler (20) mit einem nachgeschalteten Verstärker (21) besteht, daß der lichtelektrische Wandler (20) über den Verstärker (21) mit einem Speicher (24) und mit dem ersten Eingang eines Reglers (23) verbunden ist, daß der zweite Eingang (25) des Reglers (23) mit dem Speicher (24) verbunden ist und daß der Speicher (24) an einen Vorwahlspeicher (26) für die Eingabe von "Templates" angeschlossen ist.

8. Einrichtung nach Anspruch 7
dadurch gekennzeichnet,
daß der lichtelektrische Wandler (20) über den Verstärker (21) mit der Steuereinheit (12) und die Steuereinheit (12) über zwei Leitungen (35, 36) mit dem Speicher (24) und dem Regler (23) verbunden ist.

9. Einrichtung nach Anspruch 7 oder Anspruch 8,
dadurch gekennzeichnet,
daß der Regler (23) über eine Leitung (39) mit der Steuereinheit (12) verbunden ist.

10. Einrichtung nach einem der Ansprüche 7 bis 9,
dadurch gekennzeichnet,
daß der Regler (23) über einen Regler (34) , der mit einem Einstellglied (37) verbunden ist, an die Steuereinheit (12) angeschlossen ist.

11. Einrichtung nach einem der Ansprüche 7 bis 10,
dadurch gekennzeichnet,
daß der Speicher (24) nach dem Einlesen des "Templates" als Maximalwertspeicher oder als Maximalsteigungsspeicher oder als Mittelwertbildungsspeicher ausgebildet ist.

FIG.1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| D,A | DE - A1 - 3 524 877 (MESSER-GRIESHEIM)  * Spalte 6, Zeile 57 - Spalte 7, Zeile 42 *  -- | 1 | F 23 D 14/60 F 23 N 5/08 |
| D,A | EP - A2 - 0 188 763 (MESSER-GRIESHEIM)  -- | | |
| D,A | US - A - 2 416 161 (DECK)  -- | | |
| D,A | DE - C1 - 2 203 194 (TANAKA SEISAKUSHO)  -- | | |
| A | WO - A1 - 86/04 664 (DAHLANDER)  ---- | | |

RECHERCHIERTE SACHGEBIETE (Int Cl⁵)

F 23 D 14/00
F 23 N 1/00
F 23 N 5/00
B 23 K 7/00

Der vorliegende Recherchenbericht wurde für alle Patentansprüche erstellt.

| Recherchenort | Abschlußdatum der Recherche | Prüfer |
|---|---|---|
| WIEN | 31-10-1990 | TSCHÖLLITSCH |